# EUROPÄISCHE PATENTANMELDUNG

(11) **EP 4 601 160 A1**
(43) Veröffentlichungstag der Anmeldung: **13.08.2025**
(21) Anmeldenummer: 24156616.5
(22) Anmeldetag: 08.02.2024
(51) Int. Cl.: H02K 1/06, H02K 1/14

(54) **STATOR**

(71) Anmelder: Siemens Aktiengesellschaft, 80333 München (DE)
(72) Erfinder: Hilfer, Alexander, 97616 Bad Neustadt (DE); Markert, Christian, 97650 Fladungen / OT Oberfladungen (DE); Zisler, Michael, 97717 Euerdorf-Wirmsthal (DE)
(74) Vertreter: Siemens Patent Attorneys

(57) **Zusammenfassung**

Die Erfindung betrifft einen Stator (11), aufweisend eine Mehrzahl an hintereinander angeordneten Einzelblechen (20, 21, 22), wobei ein Einzelblech (20, 21, 22) eine Mehrzahl an Blechsegmenten (2, 3, 14, 15, 16, 17) aufweist.

## Beschreibung

Die Erfindung betrifft einen Stator.

Durch Verzug beim Schweißen von paketierten Einzelblechen mit geringer Jochstärke zu einem Statorpaket können Probleme hinsichtlich der thermischen Anbindung am Gehäuse, Nutrasten oder auch Drehmomentwelligkeit auftreten.

Zudem wird bei der Herstellung konventioneller Einzelbleche für Statoren, insbesondere mit großem Statordurchmesser, viel Elektroblech verschwendet.

Der Erfindung liegt die Aufgabe zugrunde, dies zu verbessern.

Die Lösung der Aufgabe gelingt durch Anspruch 1, d. h. einen Stator, aufweisend eine Mehrzahl an hintereinander angeordneten Einzelblechen, wobei ein Einzelblech eine Mehrzahl an Blechsegmenten aufweist.

Das Einzelblech kann auch als Statorblech bezeichnet werden.

Durch Segmentierung der Statorbleche, anstatt einer Vollronde, wird Elektroblech eingespart. Es ist möglich, ein Elektroblech beim Stanzen besser auszunutzen, da kleinere Teile gestanzt werden können.

Vorteilhaft ist eine Ausführung, wonach die Einzelbleche Backlack aufweisen.

Die Einzelbleche sind vorzugsweise mittels Backlacks verbunden. Die Einzelbleche können auch mittels eines anderen Stoffes verklebt sein.

Eine, insbesondere vollflächige, Verklebung der einzelnen Bleche durch Backlack ist von Vorteil. Die Einzelbleche sind so gut miteinander verbunden. Dadurch werden Vibrationen und Geräusche reduziert. Ferner kann ein Eindringen von Feuchtigkeit vermieden werden.

Vorteilhaft ist eine Ausführung, wonach die Blechsegmente kongruent sind. Dies erleichtert z. B. eine Fertigung der Bleche, die beispielsweise aus Elektroblech gestanzt werden. Es wird vorteilhaft nur ein Stanzwerkzeug benötigt.

Die Erfindung bietet Vorteile beim Stanzen, da weniger Abfall anfällt.

Vorteilhaft ist zudem eine Ausführung, wonach in Axialrichtung betrachtet ein erstes Blechsegment eines ersten Einzelblechs um einen Winkel α zu einem ersten Blechsegment eines zweiten Einzelblechs versetzt angeordnet ist.

Der Winkel α ist vorzugsweise wenigstens 20 ° und höchstens 100°.

Vorteilhaft ist eine Ausführung, wonach bei n Blechsegmenten der Winkel α = 360°/2n ist. Eine Toleranz von +/- 10% ist hierbei möglich.

Vorteilhaft ist eine Ausführung, wonach ein erstes Blechsegment und ein zweites Blechsegment dadurch verbunden sind, dass ein Zapfen des ersten Blechsegments in einen Zapfenschlitz des zweiten Blechsegments eingreift.

Von Vorteil ist eine Ausführung, wonach ein Einzelblech wenigstens zwei und höchstens acht Blechsegmente aufweist, beispielsweise vier.

Der Zapfen kann eine rechtwinklige Kontur aufweisen. Der Zapfen kann konisch ausgebildet sein. Auch eine abgerundete Kontur ist möglich. Verschiedene Ausgestaltungen und Formen sind denkbar.

Zapfen und Zapfenschlitz können eine Schwalbenschwanzverbindung bilden. Es sind verschiedene Verbindungsmöglichkeiten möglich. Eine Schwalbenschwanzverbindung der Segmente ist jedoch von Vorteil, da sich diese durch Stärke und Stabilität auszeichnet. Vorteilhaft ist eine Ausführung, wonach die Einzelbleche Nuten zum Einlegen einer Wicklung aufweisen.

Die Lösung der Aufgabe gelingt ferner durch eine dynamoelektrische rotatorische Maschine, aufweisend einen derartigen Stator.

Im Folgenden wird die Erfindung anhand der in den Figuren dargestellten Ausführungsbeispiele näher beschrieben und erläutert. Es zeigen:
- FIG 1: eine Schwalbenschwanzverbindung,
- FIG 2: segmentierte Statorbleche,
- FIG 3: eine Maschine.

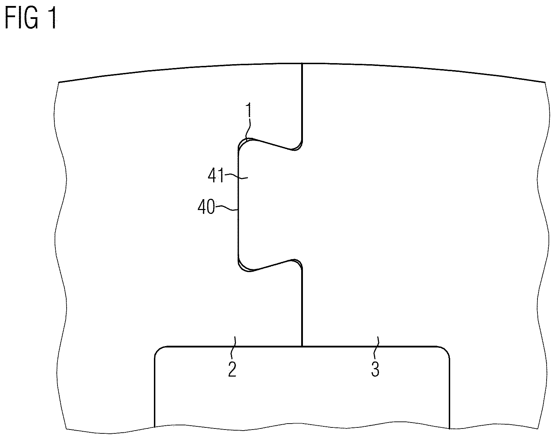

FIG 1 zeigt eine Schwalbenschwanzverbindung 1, mittels derer zwei Segmente 2 und 3 miteinander verbunden sind. Es sind auch andere Verbindungsarten möglich, allerdings bietet die Schwalbenschwanzverbindung eine hohe Stabilität.

Vorteilhaft sind Verbindungen, bei denen ein Zapfen 41 eines Segments 3 in einen Zapfenschlitz 40 eines anderen Segments 2 eingreift. Ein Segment 2, 3 weist vorteilhaft auf einer Seite einen Zapfenschlitz 40 und auf der anderen Seite einen Zapfen 41 auf.

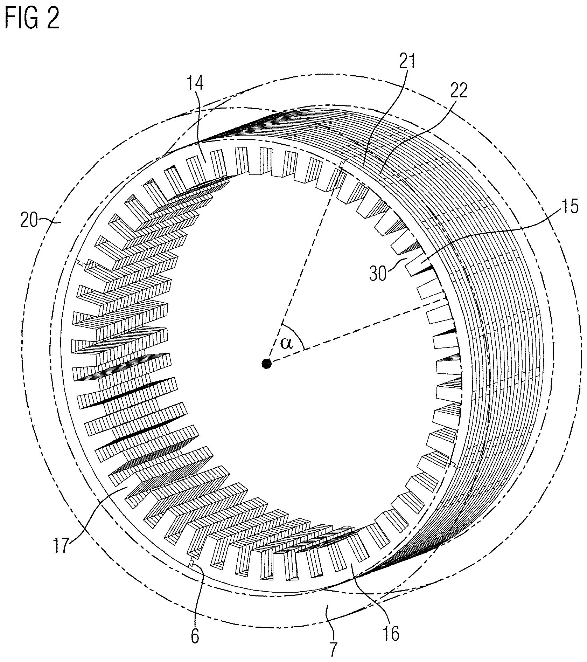

FIG 2 zeigt segmentierte Statorbleche 20, 21, 22.

Die Statorbleche sind vorteilhaft mittels Backlack verbunden.

Das Statorblech 20 weist vier Segmente 14, 15, 16 und 17 auf. Zwei Segmente sind, vorzugsweise lösbar, miteinander verbunden. Dies ist durch die Verbindung 6 dargestellt.

Vorzugsweise sind die Segmente gleichartig und gleichförmig.

Vorteilhaft ist dies eine Schwalbenschwanzverbindung, wie in FIG 1 gezeigt, es sind jedoch auch andere möglich. Exemplarisch genannt sei hierbei eine Ambossverbindung.

Um eine Stabilität über eine axiale Länge des Stators zu gewährleisten, sind vorteilhaft die Segmente eines ersten Statorblechs 20 zu den Segmenten eines weiteren Statorblechs 21 versetzt angeordnet.

FIG 1 zeigt, dass das Statorblech 20 vier Segmente 14, 15, 16, 17 aufweist. Vorteilhaft weist auch das axial dahinter angeordnete Statorblech 21 vier Segmente auf. Ein erstes Segment des zweiten Statorblechs 21 ist beispielsweise um einen Winkel α = 45° versetzt angeordnet.

Liegt eine Aufteilung eines Statorblechs in sechs Segmente vor, ist eine Versetzung um einen Winkel von 30° vorteilhaft. Auch zwei Segmente sind möglich. Auch acht oder mehr Segmente sind möglich.

Der Drehwinkel α ist vorteilhaft abhängig von einer Anzahl der Segmente pro Statorblech.

Durch die Verdrehung bzw. versetzte Anordnung wird vorteilhat eine davorliegende Anstoßstelle zweier Segmente verdeckt.

Es ist auch möglich, zwei oder mehr, beispielsweise wenigstens fünf und maximal 10, Statorbleche mit Segmenten zu paketieren und dieses Teilpaket versetzt, um einen Drehwinkel zu einem weiteren Teilpaket anzuordnen.

Die Anordnung kann umlaufend sein, also beispielsweise eine Versetzung um immer wieder einen Winkel drehend in einer positiven Drehrichtung. Auch ein Zurückdrehen ist möglich, indem ein erstes Statorblech (bzw. Teilpaket) und ein zweites Statorblech (bzw. Teilpaket) um einen Winkel in positiver Drehrichtung versetzt angeordnet sind und das darauffolgende oder ein später folgendes um einen Winkel in negativer Drehrichtung versetzt angeordnet ist.

Eine Kombination aus einer umlaufenden und zurückdrehenden Anordnung ist ebenso denkbar.

Der Stator in FIG 2 weist zudem Nuten 30 zum Einlegen einer Wicklung auf.

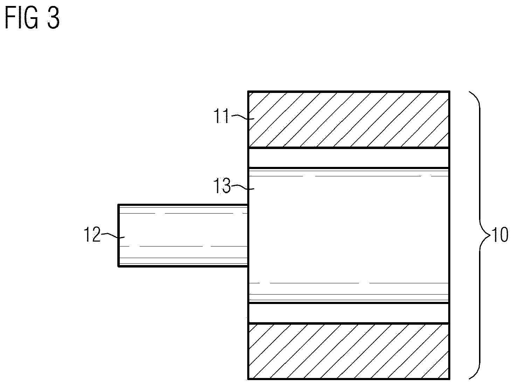

FIG 3 zeigt eine dynamoelektrische rotatorische Maschine 10 mit einer Welle 12, einem Rotor 13 sowie einem Stator 11. Der Stator 11 weist vorzugsweise die vorstehenden Merkmale auf.

Die Erfindung eignet sich für Maschinen mit Achshöhe 60 mm, aber auch 90 mm bis 130 mm. Auch andere Achshöhen sind möglich. Insbesondere für große Achshöhen eignet sich die Erfindung besonders gut.

Durch die Erfindung können technische Probleme, insbesondere hinsichtlich der thermischen Anbindung am Gehäuse, Nutrasten und/oder Drehmomentwelligkeit durch Verzug beim Schweißen vermieden werden.

Es wird Material eingespart und weniger Elektroblech benötigt für Elektromotoren mit gro-ßem Statordurchmesser.

Um einen Verzug weiter zu verhindern sind die segmentierten Bleche vorzugsweise mittels Backlacks miteinander verbunden.

Vorzugsweise weist der Stator ein Gehäuse (siehe Bezugszeichen 7 in FIG 2) auf, allerdings ist auch eine gehäuselose Ausführung möglich.

## Patentansprüche

1. Stator (11), aufweisend eine Mehrzahl an hintereinander angeordneten Einzelblechen (20, 21, 22), wobei ein Einzelblech (20, 21, 22) eine Mehrzahl an Blechsegmenten (2, 3, 14, 15, 16, 17) aufweist.

2. Stator (11) nach Anspruch 1, wobei die Einzelbleche (20, 21, 22) Backlack aufweisen.

3. Stator (11) nach einem der vorhergehenden Ansprüche, wobei die Einzelbleche mittels Backlacks verbunden sind.

4. Stator (11) nach einem der vorhergehenden Ansprüche, wobei die Blechsegmente (2, 3, 14, 15, 16, 17) kongruent sind.

5. Stator (11) nach einem der vorhergehenden Ansprüche, wobei in Axialrichtung betrachtet ein erstes Blechsegment (2, 3, 14, 15, 16, 17) eines ersten Einzelblechs (20) um einen Winkel α zu einem ersten Blechsegment eines zweiten Einzelblechs (21) versetzt angeordnet ist.

6. Stator (11) nach Anspruch 5, wobei der Winkel α wenigstens 20 ° und höchstens 100° ist.

7. Stator (11) nach einem der Ansprüche 5 oder 6, wobei bei n Blechsegmenten der Winkel α = 360°/2n ist.

8. Stator (11) nach einem der vorhergehenden Ansprüche, wobei ein erstes Blechsegment (2, 3, 14, 15, 16, 17) und ein zweites Blechsegment dadurch verbunden sind, dass ein Zapfen (41) des ersten Blechsegments (3) in einen Zapfenschlitz (40) des zweiten Blechsegments (2) eingreift.

9. Stator (11) nach einem der vorhergehenden Ansprüche, wobei ein Einzelblech wenigstens zwei und höchstens acht Blechsegmente aufweist, beispielsweise vier.

10. Stator (11) nach einem der vorhergehenden Ansprüche, wobei der Zapfen (41) eine rechtwinklige Kontur aufweist.

11. Stator (11) nach einem der vorhergehenden Ansprüche, wobei der Zapfen (41) konisch ausgebildet ist.

12. Stator (11) nach einem der vorhergehenden Ansprüche, wobei Zapfen (41) und Zapfenschlitz (40) eine Schwalbenschwanzverbindung (1) bilden.

13. Stator (11) nach einem der vorhergehenden Ansprüche, wobei die Einzelbleche (20, 21, 22) Nuten (30) zum Einlegen einer Wicklung aufweisen.

14. Dynamoelektrische rotatorische Maschine, aufweisend einen Stator nach einem der Ansprüche 1 bis 13.
